Europäisches Patentamt

(19) European Patent Office

Office européen des brevets

(11) EP 0 976 541 B1

(12) **FASCICULE DE BREVET EUROPEEN**

(45) Date de publication et mention
de la délivrance du brevet:
**26.03.2003 Bulletin 2003/13**

(51) Int Cl.⁷: **B32B 15/01**, C22C 38/40,
C22C 38/04, C22C 38/02,
C21D 8/06

(21) Numéro de dépôt: **99401876.0**

(22) Date de dépôt: **23.07.1999**

---

(54) **Fil composite comprenant une ame en acier au carbone et une couche externe en acier inoxydable**

Verbunddracht mit einem Kern aus Kohlenstoffstahl und einer Aussenschicht aus einem rostfreiem Stahl

Composite wire comprising a core of carbon steel and an outer layer of stainless steel

---

(84) Etats contractants désignés:
**AT BE CH CY DE DK ES FI FR GB GR IE IT LI LU MC NL PT SE**

(30) Priorité: **30.07.1998 FR 9809739**

(43) Date de publication de la demande:
**02.02.2000 Bulletin 2000/05**

(73) Titulaires:
• **Aster**
  **92800 Puteaaux (FR)**
• **UGINE-SAVOIE IMPHY**
  **73400 Ugine (FR)**

(72) Inventeurs:
• **Hauser, Jean-Michel**
  **73400 Ugine (FR)**
• **François, Marc**
  **57000 Metz (FR)**

(74) Mandataire: **Lagrange, Jacques Etienne**
**USINOR**
**Direction Propriété Industrielle**
**Immeuble 'La Pacific'**
**11/13 Cours Valmy**
**La Défense 7**
**TSA 10001**
**92070 Paris La Défense Cédex (FR)**

(56) Documents cités:
| EP-A- 0 059 070 | EP-A- 0 225 983 |
| EP-A- 0 546 549 | EP-A- 0 761 426 |
| EP-A- 0 851 039 | GB-A- 1 305 419 |
| US-A- 4 917 969 | US-A- 5 366 569 |

• **PATENT ABSTRACTS OF JAPAN vol. 006, no. 039 (M-116), 10 mars 1982 (1982-03-10) -& JP 56 154239 A (SUMITOMO ELECTRIC IND LTD), 28 novembre 1981 (1981-11-28)**
• **PATENT ABSTRACTS OF JAPAN vol. 016, no. 507 (M-1327), 20 octobre 1992 (1992-10-20) -& JP 04 187336 A (SHINKO KOSEN KOGYO KK), 6 juillet 1992 (1992-07-06)**
• **PATENT ABSTRACTS OF JAPAN vol. 006, no. 035 (C-093), 3 mars 1982 (1982-03-03) -& JP 56 152922 A (SUMITOMO ELECTRIC IND LTD), 26 novembre 1981 (1981-11-26)**
• **PATENT ABSTRACTS OF JAPAN vol. 006, no. 033 (M-114), 27 février 1982 (1982-02-27) -& JP 56 148410 A (SUMITOMO ELECTRIC IND LTD), 17 novembre 1981 (1981-11-17)**
• **PATENT ABSTRACTS OF JAPAN vol. 011, no. 111 (M-578), 8 avril 1987 (1987-04-08) -& JP 61 255781 A (SUMITOMO METAL IND LTD;OTHERS: 01), 13 novembre 1986 (1986-11-13)**

---

**Description**

L'invention est relative à un fil composite de petit diamètre et de résistance mécanique élevée comportant une âme en acier au carbone et une couche extérieure en acier inoxydable.

Les fils fins, de diamètre inférieur à 1 mm, ayant une résistance à la traction supérieure à 2000 MPa, utilisés pour fabriquer, par exemple, des câbles de haubanage, des câbles pour le renfort de bandes transporteuses ou de tuyaux sous pression, des fils ou des câbles de renfort d'élastomères, sont, en général, obtenus par tréfilage fin d'un fil machine en acier à haut carbone contenant environ 0,8 % de carbone, 0,5 % de manganèse, 0,3 % de silicium, le reste étant essentiellement du fer. Ces fils présentent l'inconvénient d'être sensibles à la corrosion, ce qui conduit à des risques de rupture en service prématurée. Ce problème de la résistance à la corrosion existe également pour des fils de diamètre plus important, et il a été proposé d'y remédier en utilisant des fils composites comportant une âme en acier à haut carbone identique à celui qui vient d'être décrit, et une couche externe mince en acier inoxydable austénitique du type SUS 304 contenant de 17 % à 19 % de chrome, de 9 % à 11 % de nickel, environ 0,1 % de carbone, le reste étant du fer et des impuretés résultant de l'élaboration. C'est le cas, notamment, dans les demandes de brevet japonais JP 56 148410 et JP 56 152922. Mais les solutions proposées par ces demandes de brevet ne permettent pas d'obtenir des diamètres inférieurs à 1 mm et des résistances à la traction supérieures à 2000 MPa. Ces limites résultent, notamment, de la formation de carbures de chrome à l'interface entre l'acier à haut carbone et l'acier inoxydable lors des traitements thermiques nécessaires au tréfilage. On connaît également par EP 0 761 426 un rayon de bicyclette comportant une âme en acier au carbone du type C22 ou D25 et une couche extérieure inoxydable du type 1.4301, 1.4401 ou 1.4571.

Pour limiter l'effet néfaste des carbures de chrome à l'interface entre l'acier à haut carbone et l'acier inoxydable, il a été proposé, dans la demande de brevet japonais JP 41 87336, d'intercaler entre l'acier à haut carbone et l'acier inoxydable, une fine couche de cuivre. On peut ainsi obtenir un fil de 0,7 mm de diamètre, dont la résistance à la traction est de 2000 MPa. Mais, avec cette technique, il n'est pas possible d'obtenir un diamètre inférieur et une résistance supérieure ; de plus, cette technique nécessite le dépôt d'une couche de cuivre sur l'âme en acier à haut carbone, ce qui complique la fabrication.

Le but de la présente invention est de remédier à ces inconvénients et de proposer un fil de diamètre inférieur à 1 mm et de résistance à la traction supérieure à 2000 MPa, ayant une bonne résistance à la corrosion.

A cet effet, l'invention a pour objet un fil composite comprenant une âme en acier au carbone et une couche externe en acier inoxydable. Ce fil est tel que :

- la composition chimique de l'acier au carbone comprend, en poids :

$$0,15\ \% \leq C \leq 0,35\ \%$$

$$0,1\ \% \leq Si \leq 0,3\ \%$$

$$0,5\ \% \leq Mn \leq 1\ \%$$

$$0\ \% \leq V \leq 0,3\%$$

le reste étant du fer et des impuretés résultant de l'élaboration,
- la composition chimique de l'acier inoxydable comprend, en poids :

$$0,005\ \% \leq C \leq 0,05\ \%$$

$$0,005\ \% \leq N \leq 0,05\%$$

$$0,1\ \% \leq Si \leq 2\ \%$$

$$0,1\ \% \leq Mn \leq 5\ \%$$

$$9\ \% \leq Ni \leq 12\ \%$$

$$15\ \% \leq Cr \leq 20\ \%$$

$$0\ \% \leq Mo \leq 3\ \%$$

$$1,5\% \leq Cu \leq 4\%$$

le reste étant du fer et des impuretés résultant de l'élaboration, l'acier inoxydable satisfaisant, en outre, la relation :

$$- 150 \leq 551 - 462\ x\ (C + N) - 9,2\ x\ Si - 20\ x\ Mn - 13,7\ x\ Cr$$

$$- 29\ x\ (Ni + Cu) - 18,5\ x\ Mo <\!-55$$

- le diamètre du fil est inférieur à 1 mm et la résistance à la traction du fil est supérieure à 2000 MPa.

De préférence, la composition chimique de l'acier au carbone est telle que :

$$S \leq 0,02\ \%$$

$$P \leq 0,02\%$$

$$Al \leq 0,005\ \%$$

$$N \leq 0,008\%$$

De préférence, le rapport de la section du fil qui est en acier inoxydable à la section totale du fil est comprise entre 5 % et 20 %.
Dans ce cas, on peut obtenir un fil dont le diamètre est compris entre 0,1 mm et 0,8 mm, et la résistance à la traction comprise entre 2100 MPa et 2700 MPa. Le tréfilage peut alors être effectué sans traitement thermique intermédiaire.
La composition chimique de l'acier au carbone peut, également, être telle que :

$$0,35\ \% \leq C \leq 0,6\ \%$$

$$0,3\ \% \leq Mn \leq 0,6\ \%$$

- et la composition chimique de l'acier inoxydable telle que :

$$5\% \leq Ni \leq 12\ \%$$

$$10\% \leq Cr \leq 20\%$$

**3**

$$0\% \leq Cu \leq 4\%$$

la composition inoxydable satisfaisant en outre, la relation:

$$- 55 \leq 551 - 462 \times (C+N) - 9,2 \times Si - 20 \times Mn - 13,7 \times Cr$$

$$- 29 \times (Ni + Cu) - 18,5 \times Mo \leq -30$$

De préférence, la composition chimique de l'acier inoxydable doit être telle que :

$$C + N \leq 0,06 \%$$

De préférence également, la teneur en cuivre de l'acier inoxydable doit être comprise entre 3 % et 4 %.

On peut alors obtenir un fil dont le diamètre est compris entre 0,1 mm et 0,8 mm et dont la résistance à la traction comprise entre 2700 MPa et 3400 Mpa. Le tréfilage de ce fil nécessite un traitement thermique intermédiaire qui :

- lorsque la teneur en carbone est comprise entre 0,35 % et 0,45 %, peut être une trempe par refroidissement à une vitesse supérieure à 100 °C/s après austénitisation entre 950 °C et 1050 °C pendant environ 5 s, suivie d'un revenu entre 550 °C et 650 °C pendant environ 5 s,
- lorsque la teneur en carbone est comprise entre 0,45 % et 0,6 %, peut être soit un patentage entre 550 °C et 600 °C, soit un refroidissement continu jusqu'à la température ambiante à une vitesse supérieure à 20 °C/s après une austénitisation entre 950 °C et 1050 °C pendant environ 5 s.

Un fil ou cable constitué d'une pluralité de fils selon l'invention peut être utilisé, notamment, pour le renforcement d'élastomères.

L'invention va maintenant être décrite plus en détails et illustrée par des exemples.

Pour fabriquer un fil composite selon l'invention, on part d'un fil machine de diamètre égal, par exemple, à 5,5 mm, ou d'un fil tréfilé de plus petit diamètre, par exemple 3 mm, en acier au carbone obtenu par laminage à chaud d'une billette. Le fil est décapé puis revêtu, sur toute sa surface, d'une couche d'acier inoxydable d'épaisseur de quelques dixièmes de millimètres environ (de préférence entre 0,1 et 0,3 mm), afin d'obtenir une ébauche de fil composite. L'épaisseur de la couche d'acier inoxydable est déterminée pour que la proportion de la section de l'ébauche, et donc du fil composite, qui est constituée d'acier inoxydable soit comprise entre 5 % et 20 %, et de préférence, moins de 10 %, de la section totale de l'ébauche ou du fil composite.

Le revêtement du fil machine peut se faire par différents procédés, par exemple par colaminage d'un tube en acier inoxydable et d'un fil en acier au carbone inséré dans le tube. On peut également enduire le fil d'acier au carbone d'une couche d'acier inoxydable en le faisant passer à travers un bain d'acier inoxydable, ou encore, réaliser le revêtement par plaquage d'un feuillard sur la surface du fil machine, ou par tout autre procédé connu de l'homme du métier.

L'ébauche ainsi obtenue est alors tréfilée avec ou sans traitement thermique au cours du tréfilage.

D'une façon générale l'acier au carbone utilisé contient, en poids, de 0,15 % à 0,6 % de carbone, de 0,1 % à 0,3 % de silicium, de 0,3 % à 1 % de manganèse, éventuellement jusqu'à 0,3 % de vanadium, le reste étant du fer et des impuretés résultant de l'élaboration.

La teneur en carbone est choisie d'une part pour permettre d'obtenir la résistance à la traction souhaitée, comprise entre 2000 MPa et 3400 MPa, d'autre part pour éviter d'apporter trop de carbone au voisinage de l'interface entre l'acier au carbone et l'acier inoxydable.

Le silicium est un résidu de désoxydation de l'acier et sa teneur ne doit pas être trop élevée pour ne pas trop diminuer la ductilité.

Le manganèse confère une certaine trempabilité, nécessaire pour obtenir une résistance à la traction très élevée.

Le vanadium peut être ajouté pour augmenter la résistance mécanique finale du fil tréfilé fin.

Les impuretés résultant de l'élaboration comprennent notamment le soufre dont la teneur doit, de préférence, rester inférieure à 0,02 %, le phosphore dont la teneur doit, de préférence, rester inférieure à 0,02 %, l'aluminium dont la teneur doit, de préférence, rester inférieure à 0,005 %, et l'azote dont la teneur doit, de préférence, rester inférieure à 0,008 %. Ces limites sont souhaitables pour permettre un tréfilage fin.

D'une façon générale, également, l'acier inoxydable est un acier inoxydable austénitique dont la structure est susceptible de se transformer en martensite après tréfilage et qui contient peu de carbone pour limiter les risques de précipitation de carbures de chrome à l'interface entre l'acier inoxydable et l'acier au carbone. Cet acier contient, en poids:

- de 0,005 % à 0,05 % de carbone et de 0,005 % à 0,05 % d'azote, de façon à permettre d'obtenir une structure majoritairement martensitique après tréfilage, tout en limitant les risques de précipitation de carbures de chrome à l'interface entre l'acier inoxydable et l'acier au carbone,
- de 0 % (en général plus de 0,1 %) à 2 % de silicium, cet élément nécessaire à la désoxydation ne doit pas être en trop grande quantité pour éviter de fragiliser le métal à l'état écroui,
- de 0,1 % à 5 % de manganèse, cet élément nécessaire au contrôle des inclusions a, de plus, l'avantage de favoriser l'obtention d'une structure austénitique ne doit pas être en trop grande quantité pour éviter des difficultés d'élaboration,
- de 5 % à 12 % de nickel pour conférer à l'acier une structure austenitique susceptible de transformer en martensite au cours du tréfilage,
- de 10 % à 20 % de chrome pour obtenir une inoxydabilité suffisante,
- éventuellement de 0 % à 3 % de molybdène pour améliorer la résistance à la corrosion,
- éventuellement de 0 % à 4 % de cuivre pour améliorer l'aptitude de l'acier à la déformation à froid, cependant, lorsqu'il est en trop grande quantité cet élément engendre des difficultés de déformation à chaud,

le reste étant du fer et des impuretés résultant de l'élaboration telles que le soufre, le phosphore, l'oxygène et l'aluminium, ou des éléments ajoutés en très petites quantité pour contrôler les inclusions.

De préférence, la teneur en soufre est inférieure à 0,03 % et la teneur en phosphore est inférieure à 0,1 %.

Ces compositions, tant de l'acier au carbone que de l'acier inoxydable, permettent d'obtenir un fil composite de diamètre inférieur à 1 mm, et pouvant atteindre 0,1 mm, et de résistance à la traction supérieure à 2000 MPa, et pouvant atteindre 3400 MPa ; ce fil ayant une bonne résistance à la corrosion et une bonne résistance à la fatigue, en particulier du fait qu'il n'y a pratiquement pas de précipités de carbures de chrome à l'interface entre l'acier au carbone et l'acier inoxydable.

Cependant, les compositions chimiques des aciers doivent être choisies en fonction de la gamme de résistance à la traction qu'on veut obtenir.

Lorsque la résistance à la traction visée est comprise entre 2100 MPa et 2700 MPa pour un diamètre compris entre 0,2 mm et 0,8 mm, la composition chimique de l'acier au carbone est telle que :

$$0,15 \% \leq C \leq 0,35 \%$$

$$0,5 \% \leq Mn \leq 1 \%$$

Cet acier permet à la fois d'effectuer un tréfilage suffisamment poussé, c'est à dire avec un taux de réduction supérieur à 95 %, et d'obtenir les caractéristiques mécaniques souhaitées sans qu'il soit nécessaire de réaliser un traitement thermique au cours du tréfilage. Mais, pour que la fabrication du fil composite puisse se faire sans traitement thermique intermédiaire, l'acier inoxydable doit également pouvoir être tréfilé sans traitement thermique et permettre d'obtenir des caractéristiques mécaniques suffisantes. Pour cela, la composition chimique de l'acier inoxydable est choisie telle que :

$$9 \% \leq Ni \leq 12\%$$

$$15 \% \leq Cr \leq 20 \%$$

$$1,5 \% \leq Cu \leq 4 \%$$

cette composition satisfaisant, en outre, la relation :

$$- 150 \leq 551 - 462 \times (C + N) - 9,2 \times Si - 20 \times Mn - 13,7 \times Cr$$

$$- 29 \times (Ni + Cu) - 18,5 \times Mo < - 55$$

Lorsque la résistance à la traction visée est comprise entre 2700 MPa et 3400 MPa, il est nécessaire d'effectuer un traitement thermique au cours du tréfilage et la composition chimique de l'acier au carbone est telle que :

$$0,35 \% \leq C \leq 0,6 \%$$

$$0,3 \% \leq Mn \leq 0,6 \%$$

Le traitement thermique qui se fait au défilé dépend de la teneur en carbone de l'acier au carbone.

- lorsque le teneur en carbone est comprise entre 0,35 % et 0,45 %, une trempe par refroidissement à une vitesse supérieure à 130 °C / s après austénitisation entre 950 °C et 1050 °C pendant environ 5 s, c'est à dire entre 2 s et 10 s, suivie d'un revenu entre 550 °C et 650 °C pendant environ 5 s, c'est à dire entre 2 s et 10 s;
- lorsque la teneur en carbone est comprise entre 0,45 % et 0,6 %, soit un patentage entre 550 °C et 600 °C, soit un refroidissement continu jusqu'à la température ambiante à une vitesse supérieure à 20 °C / s après une austénitisation entre 950 °C et 1050 °C pendant environ 5 s, c'est à dire entre 2 s et 10 s.

Dans ce cas, l'acier inoxydable est choisi pour être compatible avec le traitement thermique. Sa composition chimique est alors telle que :

$$5\% \leq Ni \leq 12\%$$

$$10 \% \leq Cr \leq 20 \%$$

de préférence, la somme C + N doit rester inférieure à 0,06 % et la teneur en cuivre doit être comprise entre 3 % et 4 %. De plus, l'analyse doit satisfaire la relation :

$$- 55 \leq 551 - 462 \times (C + N) - 9,2 \times Si - 20 \times Mn - 13,7 \times Cr$$

$$- 29 \times (Ni + Cu) - 18,5 \times Mo \leq -30$$

A titre de premier exemple, on a réalisé un fil composite en revêtant au trempé un fil tréfilé en acier au carbone de 3,2 mm de diamètre par une couche d'acier inoxydable de 0,1 mm, soit 6 % de la section.

La composition chimique de l'acier au carbone était :

| C | Mn | P | S | Si | Al | N | V |
|---|----|----|----|----|----|----|----|
| 0,442 | 0,585 | 0,005 | 0,01 | 0,222 | 0,004 | 0,0045 | 0,15 |

La composition chimique de l'acier inoxydable était :

| C | Mn | P | S | Si | Al | N | Ni | Cr | Mo | Cu |
|---|----|----|----|----|----|----|----|----|----|----|
| 0,023 | 1,5 | 0,015 | 0,005 | 0,244 | 0,004 | 0,034 | 9,93 | 18,2 | 0,18 | 0,05 |

Avec cette analyse, on a :

$$551 - 462 \times (C + N) - 9,2 \times Si - 20 \times Mn - 13,7 \times Cr - 29 \times (Ni + Cu) - 18,5 \times Mo = - 49,5$$

Le fil ainsi revêtu d'acier inoxydable est d'abord tréfilé jusqu'au diamètre de 1,3 mm, soit un taux de réduction de 85 %. Il est alors soumis à un traitement thermique de trempe et revenu consistant en une austénitisation à 1050 °C pendant 5 secondes, suivie d'un refroidissement à la vitesse de 200 °C/s jusqu'à la température ambiante puis d'un revenu à 600 °C pendant 5 secondes.

Le tréfilage est alors poursuivi jusqu'au diamètre final de 0,20 mm. Le fil composite fin comportant une couche externe d'acier inoxydable de 6 μm d'épaisseur, soit 6 % de la section, a une résistance à la traction de 2850 MPa.

A titre de deuxième exemple, on a réalisé un fil composite en revêtant au trempé un fil machine en acier au carbone de 5,5 mm de diamètre par une couche d'acier inoxydable de 0,22 mm, soit 14 % de la section.

La composition chimique de l'acier au carbone était :

| C | Mn | P | S | Si | Al | N |
|---|---|---|---|---|---|---|
| 0,197 | 0,7 | 0,007 | 0,01 | 0,25 | 0,002 | 0,0037 |

La composition chimique de l'acier inoxydable était :

| C | Mn | P | S | Si | Al | N | Ni | Cr | Mo | Cu |
|---|---|---|---|---|---|---|---|---|---|---|
| 0,011 | 0,376 | 0,021 | 0,002 | 0,299 | 0,002 | 0,034 | 9,49 | 17,45 | 0,175 | 3,08 |

Avec cette analyse, on a :

$$551 - 462 \times (C + N) - 9,2 \times Si - 20 \times Mn - 13,7 \times Cr - 29 \times (Ni + Cu) - 18,5 \times Mo = -86,9$$

Le fil ainsi revêtu d'acier inoxydable a été tréfilé sans traitement thermique intermédiaire jusqu'au diamètre de 0,34 mm, soit une déformation rationnelle totale $\varepsilon = 5,7$.

Le fil composite fin obtenu, comporte une couche externe d'acier inoxydable de 13 μm d'épaisseur, soit 14 % de la section, et a une résistance à la traction de 2368 MPa.

**Revendications**

1.  Fil composite comprenant une âme en acier au carbone et une couche externe en acier inoxydable **caractérisé en ce que** :

    -   la composition chimique de l'acier au carbone comprend, en poids :

        $$0,15 \% \leq C \leq 0,35 \%$$

        $$0,1 \% \leq Si \leq 0,3 \%$$

        $$0,5 \% \leq Mn \leq 1 \%$$

        $$0\% \leq V \leq 0,3\%$$

        le reste étant du fer et des impuretés résultant de l'élaboration,
    -   la composition chimique de l'acier inoxydable comprend, en poids :

        $$0,005 \% \leq C \leq 0,05 \%$$

        $$0,005 \% \leq N \leq 0,05 \%$$

$$0,1 \% \leq Si \leq 2 \%$$

$$0,1 \% \leq Mn \leq 5 \%$$

$$9 \% \leq Ni \leq 12\%$$

$$15\% \leq Cr \leq 20\%$$

$$0 \% \leq Mo \leq 3 \%$$

$$1,5 \% \leq Cu \leq 4 \%$$

le reste étant du fer et des impuretés résultant de l'élaboration, la composition de l'acier inoxydable satisfaisant, en outre, la relation :

$$- 150 \leq 551 - 462 \times (C + N) - 9,2 \times Si - 20 \times Mn - 13,7 \times Cr$$

$$- 29 \times (Ni + Cu) - 18,5 \times Mo < - 55$$

- le diamètre du fil est inférieur à 1 mm et la résistance à la traction du fil est supérieure à 2000 MPa.

2. Fil selon la revendication 1 **caractérisé en ce que** la composition chimique de l'acier au carbone est telle que :

$$S \leq 0,02 \%$$

$$P \leq 0,02 \%$$

$$Al \leq 0,005\%$$

$$N \leq 0,008\%$$

3. Fil selon la revendication 1 ou 2 **caractérisé en ce que** le rapport de la section du fil qui est en acier inoxydable à la section totale du fil est compris entre 5 % et 20 %.

4. Fil selon l'une quelconque des revendications 1 à 3 **caractérisé en ce que** son diamètre est compris entre 0,1 mm et 0,8 mm, et sa résistance à la traction est comprise entre 2100 MPa et 2700 MPa.

5. Fil composite comprenant une âme en acier au carbone et une couche externe en acier inoxydable **caractérisé en ce que** :

- la composition chimique de l'acier au carbone comprend, en poids :

$$0,35 \% \leq C \leq 0,6 \%$$

$$0,1 \% \leq Si \leq 0,3 \%$$

$$0,3\ \% \leq Mn \leq 0,6\ \%$$

$$0\ \% \leq V \leq 0,3\ \%$$

le reste étant du fer et des impuretés résultant de l'élaboration,
-   la composition chimique de l'acier inoxydable comprend, en poids :

$$0,005\ \% \leq C \leq 0,05\ \%$$

$$0,005\ \% \leq N \leq 0,05\ \%$$

$$0,1\ \% \leq Si \leq 2\ \%$$

$$0,1\ \% \leq Mn \leq 5\ \%$$

$$5\ \% \leq Ni \leq 12\ \%$$

$$10\ \% \leq Cr \leq 20\ \%$$

$$0\ \% \leq Mo \leq 3\ \%$$

$$0\ \% \leq Cu \leq 4\ \%$$

le reste étant du fer et des impuretés résultant de l'élaboration, la composition de l'acier inoxydable satisfaisant, en outre, la relation :

$$- 55 \leq 551 - 462 \times (C + N) - 9,2 \times Si - 20 \times Mn - 13,7 \times Cr$$

$$- 29 \times (Ni + Cu) - 18,5 \times Mo \leq - 30$$

-   le diamètre du fil est inférieur à 1 mm et la résistance à la traction du fil est supérieure à 2000 MPa.

6.  Fil selon la revendication 5 **caractérisé en ce que** la composition chimique de l'acier au carbone est telle que :

$$S \leq 0,02\ \%$$

$$P \leq 0,02\%$$

$$Al \leq 0,005\ \%$$

$$N \leq 0,008\ \%$$

7.  Fil selon la revendication 5 ou la revendication 6 **caractérisé en ce que** la composition chimique de l'acier inoxy-

dable est telle que :

$$C + N \leq 0,06 \%$$

**8.** Fil selon l'une quelconque des revendications 5 à 7 **caractérisée en ce que** l'acier inoxydable a une teneur en cuivre comprise entre 3 % et 4 %.

**9.** Fil selon l'une quelconque des revendications 5 à 8 **caractérisé en ce que** le rapport de la section du fil qui est en acier inoxydable à la section totale du fil est compris entre 5 % et 20 %.

**10.** Fil selon l'une quelconque des revendications 5 à 9 **caractérisé en ce que** il a un diamètre compris entre 0,1 mm et 0,8 mm et une résistance à la traction comprise entre 2700 MPa et 3400 MPa.

**11.** Procédé pour la fabrication par tréfilage d'un fil selon l'une quelconque des revendications 1 à 4 **caractérisé en ce que** le tréfilage est effectué sans traitement thermique intermédiaire.

**12.** Procédé pour la fabrication par tréfilage d'un fil selon l'une quelconque des revendications 5 à 10 **caractérisé en ce que** le tréfilage comporte un traitement thermique intermédiaire qui est :

- lorsque le teneur en carbone est comprise entre 0,35 % et 0,45 %, une trempe par refroidissement à une vitesse supérieure à 100 °C / s après austénitisation entre 950 °C et 1050 °C pondant un temps compris entre 2 et 10 s, suivie d'un revenu entre 550 °C et 650 °C pendant un temps compris entre 2 et 10 s,
- lorsque la teneur en carbone est comprise entre 0,45 % et 0,6 %, soit un patentage entre 550 °C et 600 °C, soit un refroidissement continu jusqu'à la température ambiante à une vitesse supérieure à 20 ° / s après une austénitisation entre 950 °C et 1050 °C pendant un temps compris entre 2 et 10 s.

**13.** Fil ou câble constitué d'une pluralité de fils selon l'une quelconque des revendications 1 à 9 utilisé notamment pour le renforcement d'élastomères.

**Claims**

**1.** Composite wire comprising a core of carbon steel and an outer layer of stainless steel, **characterised in that**:

- the chemical composition of the carbon steel comprises, by weight:

$$0,15 \% \leq C \leq 0,35 \%$$

$$0,1 \% \leq Si \leq 0,3 \%$$

$$0,5 \% \leq Mn \leq 1 \%$$

$$0 \% \leq V \leq 0,3\%$$

the rest being iron and impurities resulting from steel making.
- the chemical composition of the stainless steel comprises, by weight:

$$0,005 \% \leq C \leq 0,05 \%$$

$$0,005 \% \leq N \leq 0,05 \%$$

$$0,1\ \% \leq Si \leq 2\ \%$$

$$0,1\ \% \leq Mn \leq 5\ \%$$

$$9\% \leq Ni \leq 12\%$$

$$15\ \% \leq Cr \leq 20\%$$

$$0\ \% \leq Mo \leq 3\ \%$$

$$1,5\ \% \leq Cu \leq 4\ \%$$

the rest being iron and impurities resulting from steel making, and the chemical composition of the stainless steel also meets the relation:

$$- 150 \leq 551 - 462 \times (C + N) - 9,2 \times Si - 20 \times Mn - 13,7 \times Cr$$

$$- 29 \times (Ni + Cu) - 18,5 \times Mo < - 55$$

- the diameter of the wire is inferior to 1 mm and the tensile strength of the wire is superior to 2000 MPa.

2.  Wire according to claim 1, **characterised in that** the chemical composition of the carbon steel is such that:

$$S \leq 0,02\ \%$$

$$P \leq 0,02\ \%$$

$$Al \leq 0,005\ \%$$

$$N \leq 0,008\ \%.$$

3.  Wire according to claim 1 or 2, **characterised in that** the ratio of the cross-section of the stainless steel wire to the entire cross-section of the wire is between 5 % and 20 %.

4.  Wire according to any of the claims 1 to 3, **characterised in that** its diameter is between 0,1 mm and 0,8 mm, and its tensile strength is between 2100 MPa and 2700 MPa.

5.  Composite wire comprising a core of carbon steel and an outer layer of stainless steel, **characterised in that**:

- the chemical composition of the carbon steel comprises, by weight:

$$0,35\ \% \leq C \leq 0,6\ \%$$

$$0,1\ \% \leq Si \leq 0,3\ \%$$

$$0,3 \% \leq Mn \leq 0,6 \%$$

$$0\% \leq V \leq 0,3\%$$

the rest being iron and impurities resulting from steel making,
- the chemical composition of the stainless steel comprises, by weight:

$$0,005 \% \leq C \leq 0,05 \%$$

$$0,005 \% \leq N \leq 0,05 \%$$

$$0,1 \% \leq Si \leq 2 \%$$

$$0,1 \% \leq Mn \leq 5 \%$$

$$5 \% \leq Ni \leq 12\%$$

$$10 \% \leq Cr \leq 20 \%$$

$$0\% \leq Mo \leq 3\%$$

$$0 \% \leq Cu \leq 4\%$$

the rest being iron and impurities resulting from steel making, and the chemical composition of the stainless steel also meets the relation:

$$- 55 \leq 551 - 462 \times (C + N) - 9,2 \times Si - 20 \times Mn - 13,7 \times Cr$$

$$- 29 \times (Ni + Cu) - 18,5 \times Mo \leq - 30$$

- the diameter of the wire is inferior to 1 mm and the tensile strength of the wire is superior to 2000 MPa.

**6.** Wire according to claim 5, **characterised in that** the chemical composition of the carbon steel is such that:

$$S \leq 0,02 \%$$

$$P \leq 0,02 \%$$

$$Al \leq 0,005 \%$$

$$N \leq 0,008 \%.$$

**7.** Wire according to claim 5 or claim 6, **characterised in that** the chemical composition of the stainless steel is such

that:

$$C+N \leq 0,06 \%.$$

**8.** Wire according to any of the claims 5 to 7, **characterised in that** the stainless steel has a content of copper between 3 % and 4 %.

**9.** Wire according to any of the claims 5 to 8, **characterised in that** the ratio of the cross-section of the stainless steel wire to the entire cross-section of the wire is between 5 % and 20 %.

**10.** Wire according to any of the claims 5 to 9, **characterised in that** it has a diameter between 0,1 mm and 0,8 mm, and a tensile strength between 2700 MPa and 3400 MPa.

**11.** Method for wire-draw manufacturing of a wire according to any of the claims 1 to 4, **characterised in that** the wire-drawing takes place without intermediate thermal treatment.

**12.** Method for wire-draw manufacturing of a wire according to any of the claims 5 to 10, **characterised in that** the wire-drawing comprises an intermediate thermal treatment, that is:

- if the content of carbon is between 0,35 % and 0,45 %, hardening by cooling with a speed higher than 100 °C/s is applied after austeniting between 950 °C and 1050 °C, during a time interval between 2 and 10 s, followed up by tempering between 550 °C and 650 °C during a time interval between 2 and 10 s,
- if the content of carbon is between 0,45 % and 0,6 %, either a patenting between 550 °C and 600 °C, or a continuous cooling off to ambient temperature, with a cooling speed higher than 20 °C/s, after austeniting between 950 °C and 1050 °C/s during a time interval between 2 and 10 s.

**13.** Wire or cable consisting of a plurality of wires according to any of the claims 1 to 9, in particular used for strengthening elastomers.

**Patentansprüche**

**1.** Verbunddraht bestehend aus einem Kern aus Kohlenstoffstahl und einer Aussenschicht aus rostfreiem Stahl, **dadurch gekennzeichnet, daß**:

- die chemische Zusammensetzung des Kohlenstoffstahls folgende Grundstoffe, in Gewichtsprozenten, einschließt:

$$0,15 \% \leq C \leq 0,35\%$$

$$0,1 \% \leq Si \leq 0,3 \%$$

$$0,5\% \leq Mn \leq 1 \%$$

$$0\% \leq V \leq 0,3\%$$

und der Rest aus Eisen und aus Verunreinigungen, die von der Stahlerzeugung herrühren, besteht,
- die chemische Zusammensetzung des rostfreien Stahls folgende Grundstoffe, in Gewichtsprozenten, einschließt:

$$0,005 \% \leq C \leq 0,05 \%$$

$$0,005\ \% \le N \le 0,05\ \%$$

$$0,1\ \% \le Si \le 2\ \%$$

$$0,1\ \% \le Mn \le 5\ \%$$

$$9\% \le Ni \le 12\ \%$$

$$15\ \% \le Cr \le 20\%$$

$$0\% \le Mo \le 3\%$$

$$1,5\ \% \le Cu \le 4\ \%$$

und der Rest aus Eisen und aus Verunreinigungen, die von der Stahlerzeugung herrühren, besteht, und die chemische Zusammensetzung des rostfreien Stahls außerdem folgender Beziehung genügt:

$$- 150 \le 551 - 462\ x\ (C + N) - 9,2\ x\ Si - 20\ x\ Mn - 13,7\ x\ Cr$$

$$- 29\ x\ (Ni + Cu) - 18,5\ x\ Mo < - 55$$

- der Drahtdurchmesser kleiner als 1 mm und die Zugfestigkeit größer als 2000 MPa ist.

2. Draht nach Anspruch 1, **dadurch gekennzeichnet, daß** die chemische Zusammensetzung des Kohlenstoffstahls derart ist, daß:

$$S \le 0,02\%$$

$$P \le 0,02\ \%$$

$$Al \le 0,005\ \%$$

$$N \le 0,008\ \%.$$

3. Draht nach Anspruch 1 oder 2, **dadurch gekennzeichnet, daß** das Verhältnis des Querschnitts des rostfreien Stahldrahts zum Gesamtdrahtquerschnitt zwischen 5 % und 20 % liegt.

4. Draht nach irgend einem der Ansprüche 1 bis 3, **dadurch gekennzeichnet, daß** sein Durchmesser zwischen 0,1 mm und 0,8 mm, und seine Zugfestigkeit zwischen 2100 MPa und 2700 MPa, liegt.

5. Verbunddraht bestehend aus einem Kern aus Kohlenstoffstahl und einer Aussenschicht aus rostfreiem Stahl, **dadurch gekennzeichnet, daß**:

- die chemische Zusammensetzung des Kohlenstoffstahls folgende Grundstoffe, in Gewichtsprozenten, einschließt:

$$0,35 \ \% \le C \le 0,6 \ \%$$

$$0,1 \ \% \le Si \le 0,3 \ \%$$

$$0,3 \ \% \le Mn \le 0,6 \ \%$$

$$0 \ \% \le V \le 0,3 \ \%$$

und der Rest aus Eisen und aus Verunreinigungen, die von der Stahlerzeugung herrühren, besteht,
- die chemische Zusammensetzung des rostfreien Stahl folgende Grundstoffe, in Gewichtsprozenten, einschließt:

$$0,005 \ \% \le C \le 0,05\%$$

$$0,005\% \le N \le 0,05 \ \%$$

$$0,1 \ \% \le Si \le 2 \ \%$$

$$0,1 \ \% \le Mn \le 5 \ \%$$

$$5\% \le Ni \le 12\%$$

$$10\% \le Cr \le 20\%$$

$$0 \ \% \le Mo \le 3\%$$

$$0\% \le Cu \le 4\%$$

und der Rest aus Eisen und aus Verunreinigungen, die von der Stahlerzeugung herrühren, besteht, und die chemische Zusammensetzung des rostfreien Stahls außerdem folgender Beziehung genügt:

$$- 55 \le 551 - 462 \ x \ (C + N) - 9,2 \ x \ Si - 20 \ x \ Mn - 13,7 \ x \ Cr$$

$$- 29 \ x \ (Ni + Cu) - 18,5 \ x \ Mo \le - 30$$

- der Drahtdurchmesser kleiner als 1 mm und die Zugfestigkeit größer als 2000 MPa ist.

6. Draht nach Anspruch 5, **dadurch gekennzeichnet, daß** die chemische Zusammensetzung des Kohlenstoffstahls derart ist, daß:

$$S \le 0,02 \ \%$$

$$P \le 0,02\%$$

**15**

$$Al \leq 0,005 \%$$

$$N \leq 0,008 \%.$$

7.  Draht nach Anspruch 5 oder Anspruch 6, **dadurch gekennzeichnet, daß** die chemische Zusammensetzung des rostfreien Stahls derart ist, daß:

$$C + N \leq 0,06\%.$$

8.  Draht nach irgend einem der Ansprüche 5 bis 7, **dadurch gekennzeichnet, daß** der rostfreie Stahl ein Kupfergehalt zwischen 3 % und 4 % hat.

9.  Draht nach irgend einem der Ansprüche 5 bis 8, **dadurch gekennzeichnet, daß** das Verhältnis des Querschnitts des rostfreien Stahldrahts zum Gesamtdrahtquerschnitt zwischen 5 % und 20 % liegt.

10. Draht nach irgend einem der Ansprüche 5 bis 9, **dadurch gekennzeichnet, daß** er einen Durchmesser zwischen 0,1 mm und 0,8 mm, und eine Zugfestigkeit zwischen 2700 MPa und 3400 MPa hat.

11. Verfahren zur Herstellung eines gezogenen Drahtes, gemäß irgend einem der Ansprüche 1 bis 4, **dadurch gekennzeichnet, daß** das Drahtziehen ohne zwischenstufliche Wärmebehandlung durchgeführt wird.

12. Verfahren zur Herstellung eines gezogenen Drahtes, gemäß irgend einem der Ansprüche 5 bis 10, **dadurch gekennzeichnet, daß** das Drahtziehen eine zwischenstufliche Wärmebehandlung folgender Art einschließt:

    -   wenn der Kohlenstoffgehalt zwischen 0,35 % und 0,45 % ist, wird eine Abschreckhärtung mit einer Abkühlungsgeschwindigkeit größer als 100 °C/s, anschließend an die Austenitisierung zwischen 950 °C und 1050 °C, während einer Dauer zwischen 2 und 10 s, gefolgt von einem Anlassen zwischen 550 °C und 650 °C, während einer Dauer zwischen 2 und 10 s,durchgeführt,
    -   wenn der Kohlenstoffgehalt zwischen 0,45 % und 0,6 % ist, wird entweder ein Patentieren zwischen 550 °C und 650 °C, oder eine stetige Abkühlung bis zur Umgebungstemperatur, mit einer Abkühlungsgeschwindigkeit größer als 20 °C/s, anschließend an die Austenitisierung zwischen 950 °C und 1050 °C/s, während einer Dauer zwischen 2 und 10 s, durchgeführt.

13. Aus einer Vielfalt von Drähten gemäß irgend einem der Ansprüche 1 bis 9, zusammengesetzter Draht oder Kabel, vor allem zur Verstärkung von Elastomeren.